# EUROPÄISCHE PATENTANMELDUNG

(11) **EP 4 442 976 A1**
(43) Veröffentlichungstag der Anmeldung: **09.10.2024**
(21) Anmeldenummer: 24160694.6
(22) Anmeldetag: 29.02.2024
(51) Int. Cl.: F02C 3/30, F02C 6/18, F02K 3/06, F28D 7/00, F28D 7/08, F28F 13/08

(54) **STRÖMUNGSMASCHINE FÜR EIN FLUGTRIEBWERK**

(30) Priorität: 24.03.2023 DE 102023107536; 07.07.2023 DE 102023118104
(71) Anmelder: MTU Aero Engines AG, 80995 München (DE)
(72) Erfinder: Bolgar, Istvan, 80995 München (DE); Woitalka, Alexander, 80995 München (DE); Gizik, Daniel, 80995 München (DE)

(57) **Zusammenfassung**

Die Erfindung betrifft eine Strömungsmaschine (1) für einen Flugantrieb mit einem von einer Gasströmung (6) in einer Strömungsrichtung durchströmten Verdichter (3), Brennraum (4), Turbine (5) und einem der Turbine (5) nachgelagerten Wärmetauscher (8), wobei der Wärmetauscher (8) eingerichtet ist, aus einem Wasser (W) mittels einer Energie der Gasströmung (6) einen Dampf zu erzeugen, welcher der Gasströmung (6) zum Verbrennen im Brennraum (4) mit Brennstoff zuführbar ist.

## Beschreibung

Die Erfindung betrifft eine Strömungsmaschine für einen Flugantrieb mit einem von einer Gasströmung in einer Strömungsrichtung der Strömungsmaschine durchströmten Verdichter, Brennraum, Turbine und einem der Turbine nachgelagerten Wärmetauscher, wobei der Wärmetauscher eingerichtet ist, aus einem Wasser mittels einer Energie der Gasströmung einen Wasserdampf zu erzeugen, welcher insbesondere der Gasströmung zum Verbrennen im Brennraum mit Brennstoff zuführbar ist.

Um die Umweltwirkung des Flugverkehrs zu verbessern, bestehen Bestrebungen bei Flugantrieben das Medium Wasser bzw. Wasserdampf bei zur Leistungssteigerung und zur Emissionssenkung zu nutzen. Beispielsweise setzt die "Water-Enhanced Turbofan (WET)"-Technologie auf eine Wassereinspritzung in eine Brennkammer. Hierbei kann in einem stromabwärts einer Triebwerksturbine angeordneten Wärmetauscher bzw. Dampferzeuger mittels Abgasenergie Wasserdampf erzeugt werden, der im Bereich der Brennkammer zugeführt wird. Nach einem Durchströmen des Dampferzeugers kann feuchtes Abgas weitere Komponenten durchströmen, die dazu dienen, Wasser aus dem Abgas abzuscheiden. Für diese WET-Konzepte sind eine effiziente Rückgewinnung des im Abgas vorhandenen Wassers und eine wirkungsgradoptimierte Nutzung der in dem Abgas der Strömungsmaschine vorhandenen Energie zur Erzeugung von Wasserdampf aus dem rückgewonnenen Wasser Grundvoraussetzungen. Der Verdampfer bzw. Wärmetauscher ist dabei typischerweise einem breiten Temperaturbereich ausgesetzt. Um die Werkstoffanforderungen zu erfüllen, wird der Wärmetauscher typischerweise für maximal erreichbare Temperaturen ausgelegt. Dies kann den Einsatz von einem Werkstoff mit speziellen Eigenschaften erfordern, was zu hohen Materialkosten und/ oder einem hohen Gesamtgewicht des Wärmetauschers führen kann.

Hiervon ausgehend ist es eine Aufgabe der vorliegenden Erfindung, eine verbesserte Strömungsmaschine für einen Flugantrieb vorzuschlagen, bei welcher insbesondere ein Gewicht und/ oder ein Wirkungsrad der Strömungsmaschine verbessert werden soll. Dies wird erfindungsgemäß durch die Lehre des unabhängigen Anspruchs erreicht. Vorteilhafte Ausführungen der Erfindung sind Gegenstand der Unteransprüche.

Zur Lösung der Aufgabe wird eine Strömungsmaschine für einen Flugantrieb mit einem von einer Gasströmung in einer Strömungsrichtung der Strömungsmaschine durchströmten Verdichter, Brennraum, Turbine und einem der Turbine nachgelagerten Wärmetauscher vorgeschlagen, wobei der Wärmetauscher eingerichtet ist, aus einem Wasser mittels einer Energie der Gasströmung einen Wasserdampf zu erzeugen, welcher insbesondere der Gasströmung zum Verbrennen im Brennraum mit Brennstoff zuführbar ist. Der Wärmetauscher weist dabei wenigstens einen von dem Wasser durchströmbaren Strömungskanal mit wenigstens zwei parallel zueinander angeordneten Abschnitten auf, wobei die wenigstens zwei Abschnitte von der Gasströmung unter einem Winkel umströmbar sind und unterschiedliche Werkstoffe aufweisen.

Unterschiedliche Werkstoffe können dabei beispielsweise unterschiedliche Materialien, Legierungen, Wärmeleitfähigkeiten, Wärmeübertragungskoeffizienten, Temperaturbeständigkeiten und/ oder Dichten aufweisen, wodurch eine spezielle Anpassung an Betriebsbedingungen für die jeweiligen Abschnitte ermöglicht ist. Durch die vorgeschlagene Lösung können beispielsweise Abschnitte des wenigstens einen Strömungskanals, welche in einem Bereich mit einer höheren Gasströmungstemperatur angeordnet sind, eine höhere Temperaturbeständigkeit aufweisen als Abschnitte, die in einem Bereich mit einer niedrigeren Gasströmungstemperatur angeordnet sind. Damit müssen nicht alle Abschnitte auf die maximale Temperatur der Gasströmung, welche typischerweise im der Turbine in Strömungsrichtung der Gasströmung nächstliegenden Bereich vorliegt ausgelegt sein, sondern weniger temperaturbeanspruchte Bereiche können beispielsweise Materialien mit niedrigerer Dichte und somit insbesondere einem geringeren Gewicht aufweisen. Hierdurch kann ein Gesamtgewicht der Abschnitte und somit des Wärmetauschers und/ oder der Strömungsmaschine reduziert werden. Dies wiederum kann sich vorteilhaft auf einen Wirkungsgrad der Strömungsmaschine auswirken.

Jede der Fluidströmungen, also das Wasser und die Gasströmung, können somit in diskreten Strömungswegen in einem Winkel, insbesondere im Wesentlichen in einem rechten Winkel, zueinander strömen bzw. geleitet werden, wodurch eine Wärmeübertragung im Kreuzstrom bzw. Kreuzgegenstrom des Wassers und der Gasströmung ausbildbar ist. Kreuzstrom bedeutet im Sinne der Erfindung, dass die beiden Strömungen bzw. Stoffströme in einem Winkel zueinander strömen, welcher im Wesentlichen 90° beträgt, jedoch insbesondere wenigstens bereichsweise hiervon abweichen kann, insbesondere bis zu plus/ minus 10°, bis zu plus/ minus 20° und insbesondere um bis zu plus/ minus 30°.

Die wenigstens zwei parallel zueinander angeordneten Abschnitte können dabei in mehreren parallelen Ebenen verlaufen und miteinander verbunden sein, sodass das Wasser die Abschnitte des wenigstens einen Strömungskanals nacheinander durchströmen kann. Das Wasser kann somit in zwei benachbarten Abschnitten in entgegengesetzter Richtung strömen bzw. geführt werden. Dabei werden die parallelen Abschnitte jedes Strömungskanals insbesondere nacheinander in dem insbesondere vorbestimmten Winkel zu den Abschnitten von der Gasströmung umströmt, wodurch das Wasser mit der Gasströmung eine Strömungskonfiguration eines Kreuzgegenstromwärmetauschers ausbilden kann. Bei einer Ausführung können die parallelen Achsen der Abschnitte auch zusammenfallen, so dass die Abschnitte konzentrisch zueinander angeordnet sind.

Eine Strömungsmaschine für einen Flugantrieb weist einen Verdichter, einen Brennraum und eine Turbine auf. Während des Betriebs der Strömungsmaschine wird Luft in einem Verdichter komprimiert, in dem Brennraum mit Brennstoff vermischt und gezündet, um die Turbine anzutreiben. Ferner kann die Strömungsmaschine ein Brennstoffaufbereitungssystem zum Aufbereiten des Brennstoffs vor dessen Verbrennung im Brennraum aufweisen, welche insbesondere den im Wärmetauscher erzeugten Wasserdampf verwenden kann. Die vorgeschlagene Strömungsmaschine weist zudem einen stromabwärts der Turbine angeordneten Wärmetauscher auf, in welchem, insbesondere aus der Gasströmung bzw. dem Abgas der Strömungsmaschine entzogenem und dem Wärmetauscher bereitgestelltem, Wasser mithilfe der Energie der Gasströmung Wasserdampf erzeugt wird. Im Rahmen der vorliegenden Offenbarung wird die Gasströmung nach Verlassen der Turbine insbesondere auch als Abgas oder Abgasströmung bezeichnet.

Ein Flugantriebkann eine solche, insbesondere axiale Strömungsmaschine aufweisen, wobei die Strömungsmaschine eine Abgasbehandlungseinrichtung aufweisen kann, die der Turbine der Strömungsmaschine insbesondere nachgelagert angeordnet ist. Die Abgasbehandlungseinrichtung kann einen Wärmetauscher, eine Kühleinrichtung und eine Wasserabscheideeinrichtung umfassen. Stromabwärts der Turbine kann die Gasströmung den Wärmetauscher, die Kühleinrichtung und die Wasserabscheideeinrichtung nacheinander durchströmen bzw. können der Wärmetauscher, die Kühleinrichtung und die Wasserabscheideeinrichtung in der Strömungsrichtung der Strömungsmaschine wenigstens teilweise an einem Abgaskanal der Abgasbehandlungseinrichtung angeordnet sein. Die Gasströmung nach der Turbine bzw. ein Abgas des Flugtriebwerks bzw. der Turbine kann mittels des Wärmetauschers auf eine Temperatur unterhalb der Temperatur beim Austreten aus der Turbine bzw. einer ursprünglichen Abgastemperatur abgekühlt werden. Hierbei wird der Gasströmung mittels des Wärmetauschers Energie entzogen, welche zum Erzeugen von Wasserdampf genutzt wird, wodurch die Temperatur der Gasströmung sinkt.

Die dem Wärmetauscher in Strömungsrichtung nachgelagerte Kühleinrichtung kann dabei als Kondensator (Kondensatorwärmetauscher) ausgebildet sein oder einen solchen aufweisen und Umgebungsluft als Kühlfluid nutzen, welche beispielsweise mittels eines Gebläses oder eines Fans der Strömungsmaschine gefördert wird. Dieser Kondensatorwärmetauscher kann im Wesentlichen zwei Bereiche aufweisen, wobei in einem stromaufwärts angeordneten ersten Bereich eine Abkühlung der im Wesentlichen gasförmigen Abgasströmung stattfindet. In einem dem ersten Bereich nachgelagerten zweiten Bereich wird die Abgasströmung (noch) weiter abgekühlt, sodass flüssige Wasseranteile in der Abgasströmung vorliegen, welche aus der Abgasströmung abgeschieden werden können. Der flüssige Wasseranteil kann in der Wasserabscheideeinrichtung von der Gasströmung getrennt werden und dem Wärmetauscher zur Dampferzeugung bereitgestellt werden. Das abgeschiedene Wasser kann dem Dampferzeuger bzw. dem Wärmetauscher beispielsweise mittels einer Zuführeinrichtung bereitgestellt werden, wobei das Wasser optional über ein Wasseraufbereitungssystem in einen Wasserspeicher geführt werden kann, wo es für eine weitere Verwendung zur Verfügung stehen kann. Damit kann das dem Wärmetauscher zuzuführende bzw. zugeführte Wasser zumindest teilweise in einem Kreislauf gehalten werden, wodurch eine zusätzliche Wasserversorgung für den Verbrennungsprozess entfallen kann.

Wenigstens ein Teil des im Wärmetauscher erzeugten Wasserdampfs kann insbesondere über eine Dampfleitung bzw. Dampfzuführung in eine Mischkammer eines Brennstoffaufbereitungssystems geleitet werden. In diese Mischkammer kann Brennstoff eingebracht und damit dem dort eingebrachten Wasserdampf zugeführt werden, wobei der Brennstoff verdampfen kann. Aus dem Wasserdampf und dem Brennstoff kann somit ein Gemisch gebildet werden, welches schließlich dem Brennraum der Strömungsmaschine zur Verbrennung zugeführt werden kann. In manchen Ausführungsformen kann der Wasserdampf auch vor und/ oder in dem Brennraum der Gasströmung zugeführt werden.

Der Wärmetauscher übernimmt in einer Strömungsmaschine, welche das WET-Konzept nutzt, im Wesentlichen zwei Funktionen: Zum einen wird der Gasströmung Energie entzogen, wodurch die Temperatur der Gasströmung abnimmt, um Wasser aus der Gasströmung rückgewinnen zu können, und zum anderen wird diese Energie genutzt, um das, insbesondere der Gasströmung entzogene Wasser zu erhitzen und/ oder zu verdampfen, um dieses zur Verbrennung in der Brennkammer nutzen zu können.

Vor diesem Hintergrund beruht die Erfindung unter anderem auf der Idee, eine Strömungskanal- bzw. Stoffströmungsführung in dem Wärmetauschbereich des Wärmetauschers derart zu gestalten, dass eine Strömungskonfiguration eines Kreuzgegenstromwärmetauschers ausbildbar ist und um diese Konfiguration wiederum zu nutzen, um verschiedene Werkstoffe in Abhängigkeit von vorliegenden Betriebsbedingungen, insbesondere Betriebstemperaturen in verschiedenen Bereichen des Wärmetauschers einzusetzen. Innerhalb des wenigstens einen Strömungskanals kann das Wasser insbesondere im Kreuzgegenstrom relativ zum Abgas bzw. der Gasströmung, welche(s) an der Außenseite des wenigstens einen Strömungskanals strömt, fließen bzw. strömen, wobei die Gasströmung stromaufwärts, also von der Turbine kommend, typischerweise die höchste Temperatur aufweist. Dadurch, dass die Gasströmung die Abschnitte des wenigstens einen Strömungskanals insbesondere nacheinander um- bzw. anströmt, nehmen die in Strömungsrichtung der Gasströmung stromaufwärts gelegenen Abschnitte Energie und somit Wärme von der Gasströmung auf, wodurch die Gasströmung wiederum abkühlt. Die Wärmeübertragung zwischen Gasströmung und Wasser erfolgt im Wärmetauscher dabei im Wesentlichen mittels Konvektion. Die Werkstoffe der verschiedenen Abschnitte können unterschiedliche Materialanforderungen erfüllen und somit nutzen, dass, bedingt durch die vorgeschlagene Strömungskonfiguration (Gas-)stromabwärts gelegene Abschnitte des wenigstens einen Strömungskanals einer Gasströmung mit verringerter Temperatur ausgesetzt sind. Durch den Einsatz verschiedener Werkstoffe kann ein relativer Temperaturunterschied zwischen der Gasströmung und dem zu verdampfenden Wasser in den Abschnitten mit unterschiedlichen Werkstoffen berücksichtigt werden, um eine Dampferzeugung bzw. eine Überhitzung des im Wärmetauscher erzeugten Wasserdampfs effizienter zu gestalten. Durch die vorgeschlagene Ausgestaltung kann der Wärmetauscher kleiner und leichter dimensioniert werden, wodurch eine Gewichtsreduktion des Wärmetauschers und somit der Strömungsmaschine erzielt werden kann. In der Gesamtbetrachtung kann hierdurch die Strömungsmaschine insgesamt leichter gestaltet sein, wodurch das Flugzeug weniger Auftrieb und/ oder Luftwiderstand generiert.

Bei einer Ausführungsform sind die wenigstens zwei Abschnitte nacheinander von der Gasströmung unter einem Winkel von insbesondere etwa 90° umströmbar. Die Angabe "etwa" soll berücksichtigen, dass der Gasstrom durch konstruktive und/ oder strömungsbeeinflussende Einschränkungen der Gasströmungszufuhr insbesondere bereichsweise von einer 90°-Strömung abweichen kann. Bei dieser Ausführung ist wesentlich, dass die Wärmeübertragung im Kreuzstromprinzip erfolgt. Hierbei verläuft die Strömungsrichtung der Gasströmung im Wesentlichen senkrecht zu einer Strömungsrichtung des Wassers, sodass sich eine Strömungskonfiguration eines Kreuzgegenstromwärmetauschers ergibt. Diese kann genutzt werden, um den wenigstens einen Strömungskanal über seine Längserstreckung gleichmäßig von der Gasströmung zu umströmen und so eine homogene Wärmeübertragung zu ermöglichen. Hierdurch können thermische Belastungen innerhalb eines Abschnitts des wenigstens einen Strömungskanal gleich oder wenigstens ähnlich ausfallen. Die Gasströmung und das Wasser können dabei in einem Winkel von etwa 90° zu einander strömen bzw. fließen. Hierbei sind durchschnittliche, strömungsbedingte und/ oder konstruktiv nicht vermeidbare insbesondere teilweise Abweichungen im Bereich bis plus/ minus 10° bis hin zu plus/ minus 30° von einem 90°-Winkel umfasst. Durch die Wärmeübertragung im Kreuzstrom kann das Wasser bzw. der Wasserdampf betriebssicher und effizient auf eine vorbestimmte Temperatur gebracht werden. Bei anderen Ausführungsformen können die wenigstens zwei Abschnitte von der Gasströmung nacheinander auch unter einem anderen Winkel als etwa 90° umströmbar sein, insbesondere unter einem Winkel im Bereich von 45° bis 90° oder auch in einem Winkel von weniger als 45°.

Um eine im Wesentlichen senkrecht zu dem wenigstens einen Strömungskanal verlaufende Umströmung des wenigstens einen Strömungskanals mittels der Gasströmung zu erzielen, kann der Wärmetauscher eine Umlenkeinrichtung aufweisen. Hierbei kann mittels der Umlenkeinrichtung des Wärmetauschers und/ oder in dem Wärmetauschbereich eine Umlenkung der Gasströmung in Bezug auf die Strömungsrichtung bzw. der Hauptströmungsachse der Strömungsmaschine erzielt werden, um eine Wärmeübertragung im Kreuzstrom bzw. Kreuzgegenstrom zwischen der Gasströmung und dem in dem wenigstens einen Strömungskanal strömenden Wasser zu ermöglichen. Hierdurch kann die Strömungsverteilung der Gasströmung relativ zu den Strömungskanälen gleichartig für jeden der Strömungskanäle ausfallen, um eine aerothermale Asymmetrie zu vermeiden.

Bei einer Ausführungsform weist ein in einer Strömungsrichtung der Gasströmung weiter stromaufwärts angeordneter Abschnitt des wenigstens einen Strömungskanals einen Werkstoff mit einer höheren Dichte auf als ein weiter stromabwärts angeordneter Abschnitt. Die Gasströmung kann beim Austreten aus der Turbine, insbesondere beim Austreten aus einer Niederdruckturbine, eine Temperatur zwischen 800 und 980 K aufweisen. Im Verlauf der Gasströmung kann sich diese Anfangstemperatur durch Energieabgabe an das Wasser reduzieren, wobei sich eine Anfangstemperatur des Wassers im Strömungsverlauf des Strömungskanal erhöhen kann. Ein solcher in der Strömungsrichtung der Gasströmung weiter stromaufwärts angeordneter Abschnitt ist im Strömungsverlauf des Wassers in dem Strömungskanal typischerweise an einer stromabwärtigen Position angeordnet, in welchem das Wasser insbesondere bereits überwiegend in dampfförmigen Zustand vorliegen kann. Weil die Gasströmung beim Eintritt in den Wärmetauschbereich die heißeste Temperatur aufweist und somit in einem dem Eintritt zugewandten Bereich des wenigstens einen Strömungskanals die meiste Energie bzw. Wärme an das in einem Strömungskanal strömende Wasser bzw. den Wasserdampf abgeben kann, liegen in diesem Bereich höhere thermische Belastungen von, weswegen Werkstoffe insbesondere höherer Dichte vorgesehen werden können.

Bei einer Ausführungsform weist ein in einer Strömungsrichtung des Wassers weiter stromaufwärts angeordneter Abschnitt des wenigstens einen Strömungskanals einen Werkstoff mit einer geringeren Dichte auf als ein weiter stromabwärts angeordneter Abschnitt. Ein solcher in der Strömungsrichtung des Wassers weiter stromaufwärts angeordneter Abschnitt, ist in der Strömungsrichtung der Gasströmung typischerweise an einer stromabwärtigen Position angeordnet, in welchem die Gasströmung bereits, insbesondere durch Energieabgabe an das Wasser, abgekühlt sein kann. Üblicherweise liegen in einem solchen Bereich niedrigere thermische Belastungen eines Strömungskanals vor, weswegen Werkstoffe niedrigerer Dichte vorgesehen sein können. Hierdurch kann eine Gewichtseinsparung in thermisch weniger belasteten Bereichen für den Wärmetauscher erzielt werden.

Bei einer Ausführungsform weist der wenigstens eine Strömungskanal an seiner der Gasströmung zugewandten Oberfläche wenigstens ein Strukturelement auf. Ein Strukturelement kann dabei beispielsweise wenigstens eine glatte, wellige und/ oder geschnittene Lamelle, wenigstens eine Rippe und/ oder wenigstens eine andersartig ausgebildete sekundäre Oberfläche sein, welche insbesondere eine gute Wärmeleitfähigkeit aufweist. Da sich der Wärmestrom aus dem Produkt des Wärmeübertragungskoeffizienten der vorhandenen Oberfläche und der Temperaturdifferenz zwischen den Fluiden, also dem Wasser und der Gasströmung ergibt, kann für den Wärmestrom die Seite des Fluids ohne Phasenwechsel, also der Gasströmung, insbesondere in Abhängigkeit des Betriebspunkts, die limitierende Seite darstellen. Durch die vorgeschlagene Lösung kann eine Oberfläche des wenigstens einen Strömungskanals vergrößert werden und somit das Produkt aus der Oberfläche und dem Wärmeübertragungskoeffizienten, dem Produkt aus der Oberfläche und dem Wärmeübertragungskoeffizienten einer dominierenden inneren Strömungskanalseite, also der Wasser führenden Seite, angeglichen werden, wodurch sich ein Wirkungsgrad erhöhen und eine Effizienz der Wärmeübertragung gesteigert werden kann.

Bei einer Ausführungsform sind wenigstens zwei Strömungskanäle durch wenigstens ein Strukturelement miteinander verbunden. Hierbei kann beispielsweise eine oder mehrere Lamelle(n) mehrere Strömungskanäle und/ oder Abschnitte miteinander verbinden, wobei die Lamelle(n) insbesondere senkrecht zu einem Strömungsverlauf des Wassers angeordnet sein kann/ können. In anderen Ausführungsbeispielen können die jeweiligen Strömungskanäle und/ oder Abschnitte eine oder mehrere unabhängig voneinander angeordnete und/ oder zueinander beabstandete Lamellen aufweisen. Hierdurch kann eine Oberfläche zum Wärmeaustausch vergrößert werden und gleichzeitig eine mechanische Stabilität der Strömungskanäle und damit des Wärmetauschers verbessert werden.

Bei einer Ausführungsform weisen wenigstens zwei Abschnitte des wenigstens einen Strömungskanals unterschiedliche Innenquerschnitte auf. Unter einem Innenquerschnitt ist insbesondere eine Rohrquerschnittsfläche eines Strömungskanals bzw. eines Abschnitts des Strömungskanals verstanden. Hierbei können beispielsweise parallele Abschnitte des Strömungskanals in wenigstens zwei Anordnungsebenen angeordnet sein, wobei Abschnitte unterschiedlicher Anordnungsebenen unterschiedliche Innenquerschnitte aufweisen können. Dabei können Abschnitte, welche in Strömungsrichtung der Gasströmung stromaufwärts bzw. näher an der Turbine angeordnet sind, einen kleineren oder größeren Durchmesser aufweisen, als Abschnitte, die in Strömungsrichtung der Gasströmung stromabwärts bzw. entfernter von der Turbine und/ oder näher an einer Zuführung des Wassers in den Strömungskanal angeordnet sind. Damit kann beispielsweise Wasser in flüssigem Zustand in Abschnitten des Strömungskanals mit größeren Innenquerschnitten strömen und mit zunehmendem Verdampfungsgrad in Abschnitten mit kleineren Innenquerschnitten, um einer Veränderung der Reynoldszahlen des bei der Verdampfung phasenwechselnden Wassers entlang des Strömungspfades entgegen zu wirken. Hierdurch kann ein Verhältnis von Wärmeübergang zu Druckverlusten verbessert werden. Zudem kann eine Rohrwandstärke eines Abschnitts in Abhängigkeit eines Querschnitts und/ oder eines verwendeten Werkstoffs bestimmt sein, um eine weitere Optimierung eines Wärmeaustauschs oder eine Gewichtsreduktion erzielen zu können.

Bei einer Ausführungsform sind wenigstens zwei parallel zueinander angeordnete Abschnitte der Strömungskanäle mittels einer Verbindungseinrichtung fluidisch verbunden. Hierbei kann die Verbindungeinrichtung ausgebildet sein, mindestens zwei insbesondere parallele und/ oder benachbarte und/ oder konzentrisch zueinander angeordnete Abschnitte, insbesondere zweier oder mehrerer Anordnungsebenen, miteinander fluidisch und damit insbesondere ohne Beeinträchtigung des Strömungs- bzw. Innenquerschnitts zu verbinden. Beispielsweise kann die Verbindungeinrichtung als ein Krümmungsabschnitt, der integral oder als separate Komponente ausgebildet sein kann, als ein Manifold oder Ringverteiler ausgebildet sein. Hierdurch kann das einen Strömungskanal durchströmende Wasser in zwei benachbarten Abschnitten insbesondere in gegengesetzten Richtungen durchströmen, wodurch der Wärmetausch im Kreuzgegenstrom ermöglicht werden kann. Zudem kann durch eine Verbindung von parallelen Abschnitten eines Strömungskanals mittels einer oder mehrerer Verbindungseinrichtung(en) ermöglicht werden, so dass ein oder mehrere Abschnitte unterschiedliche Geometrien und/ oder verschiedene Materialien aufweisen.

Bei einer Ausführungsform ist die Verbindungseinrichtung eingerichtet, Wasser aus einem Abschnitt der Strömungskanäle in wenigstens einen nächsten Abschnitt der Strömungskanäle umzulenken. Hierbei können zwei parallele und/ oder benachbarte Abschnitte insbesondere wenigstens zweier Anordnungsebenen miteinander verbunden sein bzw. werden, wobei eine Verbindung beispielsweise in Form einer, insbesondere direkten, Rohr-zu-Rohr-Verbindung, insbesondere in Form eines oder mehrerer Rohrübergangsstück(e), Rohrsammler, Manifold(s) und/ oder Ringverteiler realisiert sein können.

Bei einer Ausführungsform unterscheidet sich eine Anzahl erster Abschnitte von einer Anzahl zweiter Abschnitte des Wärmetauschers. Bei einer derartigen Ausführungsform kann die Verbindungseinrichtung eingerichtet sein, Wasser aus Abschnitten einer in Strömungsrichtung des Wassers stromaufwärts angeordneten Anordnungsebene in einem Plenum zu sammeln und auf Abschnitte einer in Strömungsrichtung des Wassers folgenden Anordnungsebene zu leiten bzw. zu verteilen. Hierdurch können unterschiedliche Anzahlen von Abschnitten verschiedener Anordnungsebenen durchströmbar verbunden werden und gleichzeitig eine Durchmischung des Wassers gefördert werden.

Bei einer Ausführungsform weist der wenigstens eine Strömungskanal ein Strömungselement auf. Ein Strömungselement kann hierbei beispielsweise ein Einsatz bzw. Insert sein, welches in einem durchströmbaren Querschnitt des wenigstens einen Strömungskanals angeordnet sein kann. Dabei kann das Strömungselement als Verengung und/ oder Störstruktur ausgebildet sein und beispielsweise eingerichtet sein, den Innenquerschnitt des Strömungskanals wenigstens abschnittsweise zu verringern, um strömungsmechanische Instabilitäten zu vermeiden oder zu reduzieren. In anderen Ausführungsformen kann das Strömungselement in einer Gitterstruktur ausgebildet sein, die insbesondere in einem Verdampfungsgebiet des Strömungskanals angeordnet sein kann. Durch eine solche Gitterstruktur können Turbulenzen erzeugt und eine Durchmischung des Wassers bzw. des Wasserdampfs erhöht werden. Hierdurch können beispielsweise in der Wasser(dampf)strömung vorliegende Tröpfchen an eine Wandung des Strömungskanals oder an einen mit der Wandung wärmeleitend verbundenen Teil des Strömungselements gebracht werden, wo sie ihnen so viel Wärmeenergie zugeführt wird, dass sie verdampfen können. Eine Leistung des Wärmetauschers kann hierdurch gesteigert werden.

Weitere Merkmale, Vorteile und Anwendungsmöglichkeiten der Erfindung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Erfindung gezeigt sind. Es versteht sich, dass andere Aspekte verwendet werden können und strukturelle oder logische Änderungen der illustrierten Ausführungsformen möglich sind, ohne den Umfang der vorliegenden Erfindung zu verlassen. Die folgende Beschreibung der Figuren ist daher nicht einschränkend zu verstehen. Es zeigt
- Fig. 1: eine schematische Darstellung einer beispielhaften Strömungsmaschine für einen Flugantrieb gemäß der vorliegenden Offenbarung;
- Fig. 2: eine schematische Darstellung eines Ausführungsbeispiels eines Wärmetauschers einer beispielhaften Strömungsmaschine gemäß der vorliegenden Offenbarung;
- Fig. 3: eine schematische Schnittdarstellung eines Ausführungsbeispiels eines Wärmetauschers einer beispielhaften Strömungsmaschine gemäß der vorliegenden Offenbarung;
- Fig. 4: eine weitere schematische Schnittdarstellung eines Ausführungsbeispiels eines Wärmetauschers einer beispielhaften Strömungsmaschine gemäß der vorliegenden Offenbarung;
- Fig. 5a, 5b: jeweils Ansichten von Strömungskanälen eines weiteren Ausführungsbeispiels eines Wärmetauschers einer beispielhaften Strömungsmaschine gemäß der vorliegenden Offenbarung;
- Fig. 6a - 6c: jeweils Ansichten von Strömungskanälen eines weiteren Ausführungsbeispiels eines Wärmetauschers einer beispielhaften Strömungsmaschine gemäß der vorliegenden Offenbarung; und
- Fig. 7a, 7b: jeweils eine schematische Schnittansicht eines ersten und eines zweiten Ausführungsbeispiels eines Strömungskanals mit einem Strömungselement eines Wärmetauschers einer beispielhaften Strömungsmaschine gemäß der vorliegenden Offenbarung.

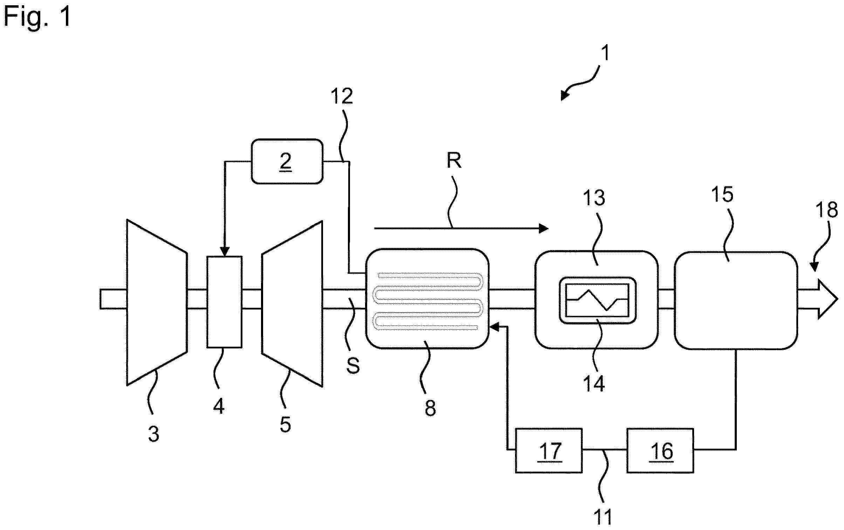

**Fig. 1** zeigt eine erfindungsgemäße Strömungsmaschine 1 für einen Flugantrieb in einer schematischen Darstellung.

Die Strömungsmaschine 1 ist beispielsweise als Mantelstromtriebwerk ausgebildet und weist einen Verdichter 3, einen Brennraum 4 und eine Turbine 5 auf, die von einer Gasströmung S in einer Strömungsrichtung R durchströmbar sind bzw. in einem Betrieb der Strömungsmaschine 1 von der Gasströmung S durchströmt werden. Der Turbine 5 in der Strömungsrichtung R nachgelagert weist die Strömungsmaschine 1 einen Wärmetauscher 8 auf, der eingerichtet ist, aus einem Wasser mittels einer Energie der Gasströmung S Wasserdampf zu erzeugen.

Dieser Wasserdampf kann über eine Dampfzuführung 12, insbesondere zusammen mit einem Brennstoff in die Gasströmung S zum Verbrennen im Brennraum 4 zugeführt werden. Die Dampfzuführung 12 kann eine Mischkammer 2 einer Brennstoffaufbereitungseinrichtung aufweisen, in welche Brennstoff eingebracht und dem dort eingebrachten Dampf zugeführt werden kann, wobei der Brennstoff verdampfen kann. Aus dem Dampf und dem Brennstoff kann somit ein Gemisch gebildet werden, welches dem Brennraum 4 der Strömungsmaschine 1 zugeführt werden kann. In manchen Ausführungsformen kann der Dampf auch vor und/oder in dem Brennraum 4 der Gasströmung S zugeführt werden.

Bezogen auf eine mittels des Pfeils illustrierte globale Strömungsrichtung R der Gasströmung S passiert die Gasströmung S zunächst den Verdichter 3, den Brennraum 4 und die Turbine 5. Nach der Turbine 5 kann die Gasströmung S auch als Abgasströmung der Strömungsmaschine 1 bezeichnet werden. Diese (Ab-) Gasströmung S kann von der Turbine 5 in den Wärmetauscher 8 strömen, welchem eine Kühleinrichtung 13 und eine Wasserabscheideeinrichtung 15 in Strömungsrichtung der Gasströmung S nachgelagert angeordnet sind.

Die Kühleinrichtung 13 kann einen zur Kühlung mit Umgebungsluft eingerichteten Kondensator 14 aufweisen, um ein Abscheiden eines in der Gasströmung S vorliegenden Wasserdampfs und/ oder Wassers zu ermöglichen. Der Kühleinrichtung 13 nachgelagert ist in dem vorliegenden Ausführungsbeispiel eine Wasserabscheideeinrichtung 15 angeordnet, die als Tropfenabscheider ausgebildet sein kann, um das Wasser zu sammeln. Die verbleibende Gasströmung S kann die Strömungsmaschine 1 über einen Auslass 18 verlassen und insbesondere an die Umgebung abgegeben werden.

Das abgeschiedene Wasser kann beispielsweise über ein optional vorhandenes Wasseraufbereitungssystem 16 in einen Wasserspeicher 17 geführt werden, wo es für eine weitere Verwendung zur Verfügung stehen kann. Mittels einer Zuführeinrichtung 11 kann das Wasser dem Wärmetauscher 8 bereitgestellt werden, um Wasserdampf zu erzeugen, der im Bereich des Brennraums 4 der Gasströmung S zugeführt werden kann.

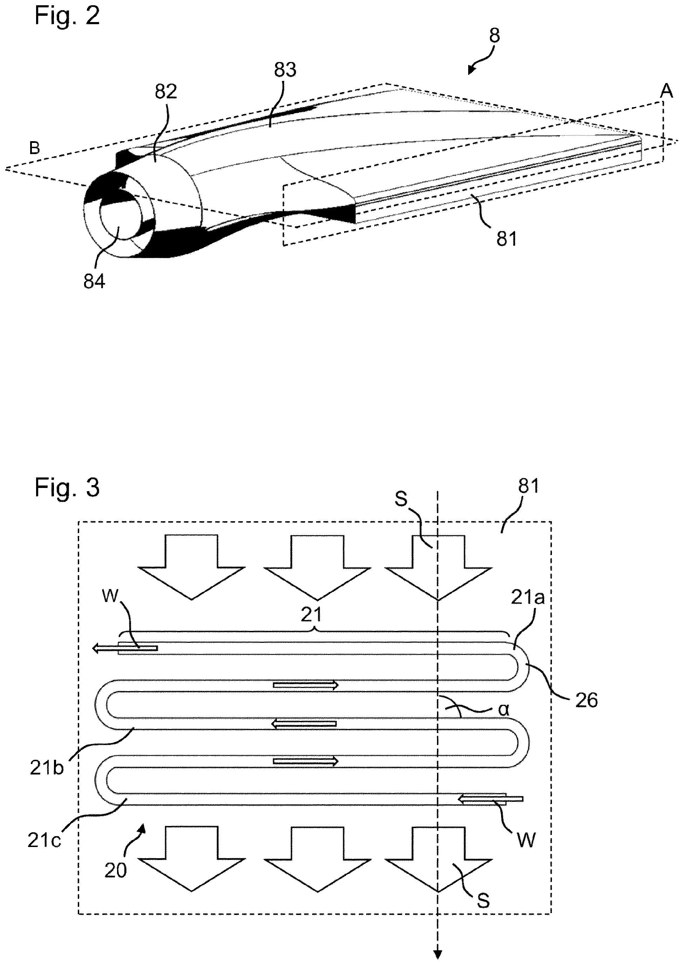

Ausführungsbeispiele des Wärmetauscher 8 werden nachfolgend im Zusammenhang mit den Fig. 2 bis 7b näher beschrieben.

**Fig. 2** zeigt eine perspektivische Darstellung eines ersten Ausführungsbeispiels eines Wärmetauschers 8, wie er in einer Strömungsmaschine 1 der Fig.1 vorgesehen sein kann.

Der beispielhafte Wärmetauscher 8 ist im Wesentlichen planar ausgebildet und weist einen sich in einer Ebene B erstreckenden Wärmetauschbereich 81 auf, in welchem wenigstens ein von Wasser durchströmbarer Strömungskanal angeordnet ist und von der Gasströmung in einem Winkel umströmbar ist. Insbesondere kann der Wärmetauscher 8 auch mehrere Wärmetauschbereiche 81 aufweisen.

An einem der Turbine 5 zugewandten Ende weist der Wärmetauscher 8 ein Sammelrohr 82 auf, mittels welchem die Gasströmung von der Turbine 5 zu dem wenigstens einen Strömungskanal bzw. zu dem Wärmetauschbereich 81 führbar ist. Das Sammelrohr 82 bzw. der Wärmetauscher 8 weist eine Umlenkeinrichtung 83 insbesondere in Form einer Krümmung im Sammelrohr 82 auf, mittels welcher die Gasströmung S umgeleitet werden kann, sodass die Gasströmung den wenigstens einen Strömungskanal in einem Winkel von 90° umströmen kann und so eine Wärmeübertragung zwischen der Gasströmung und dem Wasser zu ermöglichen.

**Fig. 3** zeigt eine schematische Darstellung einer Schnittebene A aus Fig. 2 eines Ausführungsbeispiels eines Wärmetauschbereichs 81 eines Wärmetauschers 8 wie er in einer Strömungsmaschine 1 der Fig. 1 bzw. einem Wärmetauscher 8 der Fig. 2 ausgebildet sein kann.

In dem Wärmetauschbereich 81 verläuft ein Strömungskanal 20 im Wesentlichen parallel zu der planaren Erstreckung des Wärmetauschbereichs 81 und zur Strömungsrichtung R der Strömungsmaschine 1 und ist von Wasser W durchströmbar. Dabei weist der Strömungskanal 20 wenigstens zwei, hier fünf, zueinander parallel angeordnete Abschnitte 21 auf, die in mehreren parallelen Anordnungsebenen verlaufen können. Dabei können die Abschnitte 21 mittels einer Verbindungseinrichtung 26 in einer eins zu eins Anordnung zur Fluidführung verbunden sein. Die Abschnitte 21 sind nacheinander, hier von oben nach unten, von der Gasströmung S unter einem Winkel α, hier einem Winkel von 90°, umströmbar. Dabei weisen wenigstens zwei dieser Abschnitte 21 unterschiedliche Werkstoffe auf.

Bei einer Ausführung weist ein in einer Strömungsrichtung der Gasströmung S weiter stromaufwärts angeordneter Abschnitt 21a des wenigstens einen Strömungskanals 20 einen Werkstoff mit einer höheren Dichte auf als ein weiter stromabwärts angeordneter Abschnitt 21b, 21c. Die Gasströmung S weist beim Eintritt in den Wärmetauscher 8 bzw. Wärmetauschbereich 81 die höchste Temperatur auf und kann somit in einem dem Eintritt zugewandten Bereich des wenigstens einen Strömungskanals 20 die meiste Energie bzw. Wärme an das Wasser bzw. den Wasserdampf abgeben. In diesem Bereich unterliegt der wenigstens eine Strömungskanal 20 bzw. unterliegen dort angeordnete Abschnitte 21a höheren thermische Belastungen als weiter entfernte Abschnitte 21b, 21c. Durch die Verwendung von Werkstoffen höherer Dichte für die Abschnitte 21a mit höheren thermischen Belastungen, kann eine Robustheit gesteigert und eine Lebenszeit der Abschnitte 21a bzw. des Strömungskanals 20 verlängert werden.

Zudem kann ein in einer Strömungsrichtung des Wassers W weiter stromaufwärts angeordneter Abschnitt 21c des wenigstens einen Strömungskanals 20 einen Werkstoff mit einer geringeren Dichte aufweisen als ein weiter stromabwärts angeordneter Abschnitt 21a, 21b. Hierdurch können Abschnitte 21 des Strömungskanals 20, welche in Bereichen des Wärmetauschers 8 bzw. des Wärmetauschbereichs 81 angeordnet sind, die einer niedrigeren Gasströmungstemperatur ausgesetzt sind, Materialien mit niedrigerer Dichte aufweisen. Durch die geringere Materialdichte weisen solche Abschnitte 21c ein relativ zu Abschnitten 21a, 21b mit Werkstoffen höherer Dichte ein geringeres Gewicht auf, wodurch ein Gesamtgewicht der Abschnitte 21 und somit des Wärmetauschers 8 und/ oder der Strömungsmaschine 1 reduziert werden kann.

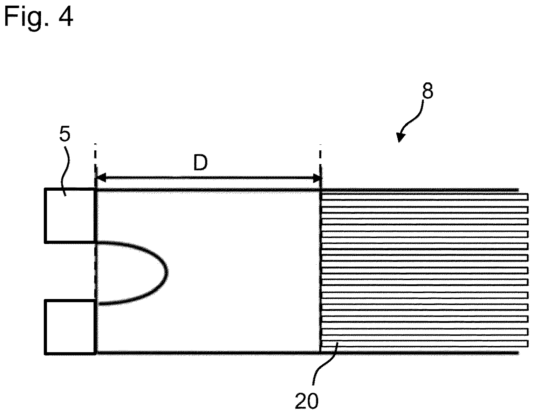

**In** **Fig. 4** ist eine schematische Schnittdarstellung in einer Ebene B des Wärmetauschers 8 aus Fig. 2 dargestellt.

Der Wärmetauscher 8 weist mehrere zueinander parallel angeordnete, von dem Wasser W durchströmbare Strömungskanäle 20 auf, die jeweils mehrere in parallelen Ebenen angeordnete Abschnitte 21 aufweisen können. Die Gasströmung S kann die Strömungskanäle 20 in einer Richtung senkrecht zur Zeichnungsebene umströmen, um Energie an das Wasser W abzugeben. Dabei können alle Strömungskanäle 20 insbesondere homogen bzw. gleichmäßig von der Gasströmung S umströmt werden, um Wasserdampf zu erzeugen.

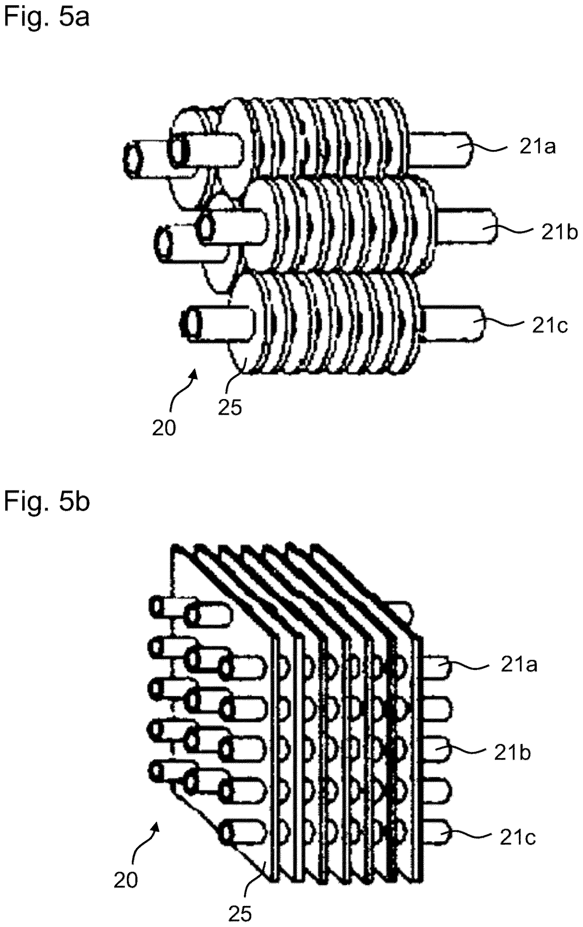

Die **Fig. 5a und 5b** zeigen jeweils Ansichten von Strömungskanälen 20 bzw. Abschnitten 21 von Strömungskanälen 20, die Strukturelemente 25 aufweisen.

In der Darstellung der Fig. 8a ist ein erstes Ausführungsbeispiel eines Strukturelements 25 in Form einer Lamelle dargestellt, welches an einer der Gasströmung S zugewandten Oberfläche des wenigstens einen Strömungskanals 20 angeordnet ist. Dieses Strömungselement 28 ist eingerichtet, die Oberfläche des Strömungskanals 20 bzw. des jeweiligen Abschnitts 21a, 21b, 21c zu vergrößern, um eine Effizienz der Wärmeübertragung zu steigern.

In der Darstellung der Fig. 5b ist ein zweites Ausführungsbeispiel eines Strukturelements 25 in Form einer die Strömungskanäle 20 bzw. die Abschnitte 21a, 21b, 21c der Strömungskanäle 20 verbindenden Lamelle dargestellt. In dem dargestellten Ausführungsbeispiels sind mehrere solcher Lamellen 25 parallel und gleichmäßig beabstandet zueinander angeordnet. Hierdurch kann eine Oberfläche zum Wärmeaustausch vergrößert werden und ein Wärmeaustauch zwischen den Abschnitten 21a, 21b, 21c ermöglicht werden.

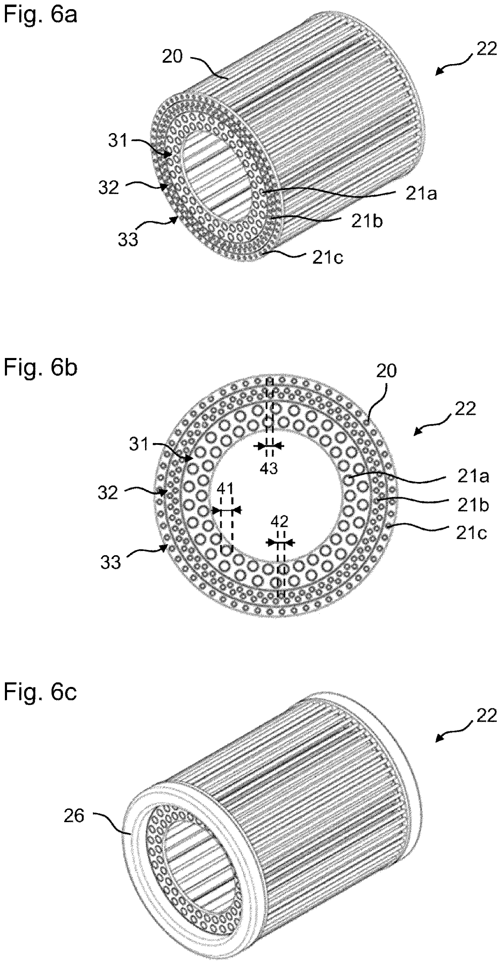

Die **Fig. 6a bis 6c** zeigen jeweils Ansichten von Strömungskanälen 20 in einer beispielhaften achssymmetrischen Anordnung.

Fig. 6a zeigt perspektivische Darstellung eines Ausführungsbeispiels einer Strömungskanalanordnung 22. Die Strömungskanäle 20 weisen dabei drei zueinander parallel angeordnete Abschnitte 21a, 21b, 21c auf, die jeweils in konzentrischen Anordnungsebenen 31, 32, 33 angeordnet sind. Dabei weisen die Abschnitte 21a, 21b, 21c der jeweiligen Ebene 31, 32, 33 unterschiedliche Anzahlen von Strömungskanälen 20 bzw. Abschnitten 21 von Strömungskanälen 20 und mit unterschiedlichen Innenquerschnitten 41, 42, 43 auf. Wenigstens zwei der Abschnitte 21a, 21b, 21c weisen unterschiedliche Werkstoffe auf.

Bei anderen Ausführungsbeispielen können die Abschnitte 21a, 21b, 21c und/ oder die Strömungskanäle 20 in einer oder mehreren sich in einer Ebene erstreckenden Anordnungsebenen 31, 32, 33 parallel bzw. in der Ausführung der Figs. 6a bis 6c konzentrisch zueinander angeordnet sein.

Fig. 6b zeigt eine Vorderansicht der Strömungskanalanordnung 22 aus Fig 6a. Beispielhaft weisen die Abschnitte 21a und 21b der Anordnungsebenen 31 und 32 unterschiedliche Innenquerschnitte 41 und 42 auf und die Anzahl der ersten Abschnitte 21a unterscheidet sich von einer Anzahl der zweiten Abschnitte 21b. Die Abschnitte 21b und 21c der Anordnungsebenen 32 und 33 weisen gleiche Innenquerschnitte 42 und 43 auf und die Anzahl der zweiten Abschnitte 21b unterscheidet sich von einer Anzahl der dritten Abschnitte 21c. Zudem weisen wenigstens zwei der Abschnitte 21a, 21b, 21c unterschiedliche Werkstoffe auf. Durch eine derartige unterschiedliche Auslegung der Innenquerschnitte 41, 42, 43, der Anzahl und Werkstoffe verschiedener Abschnitte 21 kann eine Wärmeübertragung in einem Wärmetauscher 8 verbessert werden.

Zudem kann eine Rohrwandstärke eines Abschnitts 21a, 21b, 21c in Abhängigkeit eines Innenquerschnitts 41, 42, 43 und/ oder eines verwendeten Werkstoffs bestimmt sein, um eine weitere Optimierung eines Wärmetauschs oder eine Gewichtsreduktion erzielen zu können.

Fig. 6c zeigt die perspektivische Darstellung des Ausführungsbeispiels einer Strömungskanalanordnung 22 aus Fig. 6a, wobei die Abschnitte 21c und die Abschnitte 21b der Strömungskanäle 20 mittels einer Verbindungseinrichtung 26 verbunden sind. Mittels einer solchen Verbindungseinrichtung können Abschnitte 21a, 21b, 21c, welche unterschiedliche Werkstoffe aufweisen, verbunden sein. Die Verbindungseinrichtung 26 ist dabei eingerichtet, Wasser W aus den Abschnitten 21b der Strömungskanäle 20 in die nächsten Abschnitte 21c der Strömungskanäle 20 umzulenken. In dem vorliegenden Ausführungsbeispiel ist die Verbindungseinrichtung 26 eingerichtet, Wasser W aus den Abschnitten 21b der Anordnungsebene 32 in einem Plenum zu sammeln und auf die Abschnitte 21c der Anordnungsebene 32 zu leiten. Hierdurch kann das Wasser W trotz unterschiedlicher Werkstoffe und Anzahl von Abschnitten 21b und 21c umgeleitet werden.

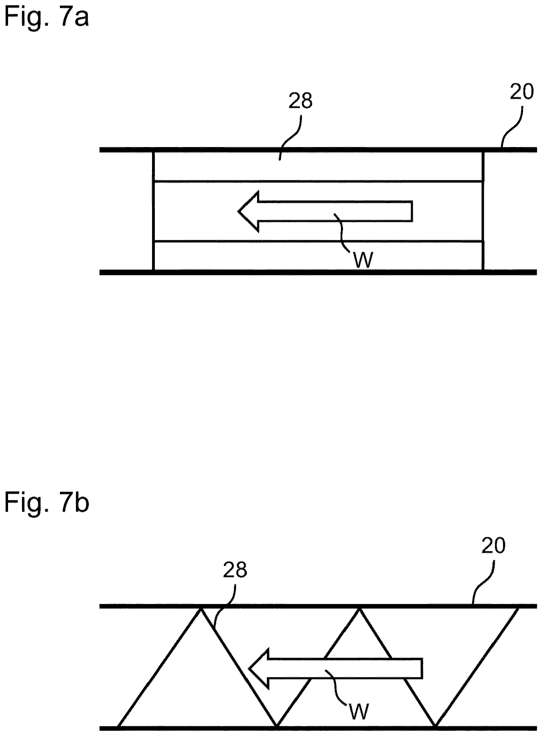

Die **Fig. 7a** und **7b** zeigen jeweils Schnittansichten von Strömungskanälen 20, die ein Strömungselement 28 aufweisen.

In der Darstellung der Fig. 8a ist ein erstes Ausführungsbeispiel eines Strömungselements 28 in Form eines Einsatzes dargestellt, welcher in dem von dem Wasser W durchströmbaren Innenquerschnitt des Strömungskanals 20 angeordnet ist. Dieses Strömungselement 28 ist eingerichtet, den Innenquerschnitt des Strömungskanals 20 wenigstens abschnittsweise zu verringern, um mithilfe veränderter Oberflächenstrukturen bzw. der Strömungsführung die Wärmeübertragung von den Kanalwänden zum Wasser zu verbessern.

In der Darstellung der Fig. 8b ist ein zweites Ausführungsbeispiel eines Strömungselements 28 in Form einer Gitterstruktur ausgebildet und in dem durchströmbaren Querschnitt des Strömungskanals 20, insbesondere in einem Verdampfungsgebiet des Strömungskanals 20 angeordnet. Durch eine solche Gitterstruktur 28 können Turbulenzen erzeugt und insbesondere in einer Wasser(dampf)strömung vorliegende Tröpfchen an eine Wandung des Strömungskanals 20 oder an einen mit der Wandung wärmeleitend verbundenen Teil des Strömungselements 28 gebracht werden, um die Wärmezufuhr zu verbessern.

### BEZUGSZEICHENLISTE

- 1: Strömungsmaschine
- 2: Mischkammer
- 3: Verdichter
- 4: Brennkammer
- 5: Turbine
- 8: Wärmetauscher
- 11: Zuführeinrichtung
- 12: Dampfzuführung
- 13: Kühleinrichtung
- 14: Kondensator
- 15: Wasserabscheideeinrichtung
- 16: Wasseraufbereitungssystem
- 17: Wasserspeicher
- 18: Auslass
- 20: Strömungskanal
- 21: Abschnitt eines Strömungskanals
- 25: Strukturelement
- 26: Verbindungseinrichtung
- 28: Strömungselement
- 31, 32, 33: Anordnungsebene
- 41, 42, 43: Innenquerschnitt eines Abschnitts eines Strömungskanals
- 81: Wärmetauschbereich
- S: Gasströmung
- R: Strömungsrichtung der Strömungsmaschine
- W: Wasser
- α: Winkel zwischen Strömungskanal und Gasströmung

## Patentansprüche

1. Strömungsmaschine (1) für einen Flugantrieb mit einem von einer Gasströmung (6) in einer Strömungsrichtung (R) der Strömungsmaschine (1) durchströmten Verdichter (3), Brennraum (4), Turbine (5) und einem der Turbine (5) nachgelagerten Wärmetauscher (8), wobei der Wärmetauscher (8) eingerichtet ist, aus einem Wasser (W) mittels einer Energie der Gasströmung (6) einen Wasserdampf zu erzeugen, welcher insbesondere der Gasströmung (6) zum Verbrennen im Brennraum (4) mit Brennstoff zuführbar ist, wobei der Wärmetauscher (8) wenigstens einen von dem Wasser (W) durchströmbaren Strömungskanal (20) mit wenigstens zwei parallel zueinander angeordneten Abschnitten (21) aufweist, wobei die wenigstens zwei Abschnitte (21) von der Gasströmung (S) unter einem Winkel (α) umströmbar sind und unterschiedliche Werkstoffe aufweisen.

2. Strömungsmaschine (1) nach Anspruch 1, wobei die wenigstens zwei Abschnitte (21) nacheinander von der Gasströmung (S) unter einem Winkel (α) umströmbar sind.

3. Strömungsmaschine (1) nach wenigstens einem der vorhergehenden Ansprüche, wobei ein in einer Strömungsrichtung der Gasströmung (S) weiter stromaufwärts angeordneter Abschnitt (21a) des wenigstens einen Strömungskanals (20) einen Werkstoff mit einer höheren Dichte aufweist als ein weiter stromabwärts angeordneter Abschnitt (21b, 21c).

4. Strömungsmaschine (1) nach wenigstens einem der vorhergehenden Ansprüche, wobei der wenigstens eine Strömungskanal (20) an seiner der Gasströmung (S) zugewandten Oberfläche wenigstens ein Strukturelement (25) aufweist.

5. Strömungsmaschine (1) nach wenigstens einem der vorhergehenden Ansprüche, wobei wenigstens zwei Strömungskanäle (20) durch wenigstens einem Strukturelement (25) miteinander verbunden sind.

6. Strömungsmaschine (1) nach wenigstens einem der vorhergehenden Ansprüche, wobei wenigstens zwei Abschnitte (21) des wenigstens einen Strömungskanals (20) unterschiedliche Innenquerschnitte (41, 42, 43) aufweisen.

7. Strömungsmaschine (1) nach wenigstens einem der vorhergehenden Ansprüche, wobei wenigstens zwei zueinander parallel angeordnete Abschnitte (21) eines Strömungskanals (S) mittels einer Verbindungseinrichtung (26) fluidisch verbunden sind.

8. Strömungsmaschine (1) nach dem vorhergehenden Anspruch, wobei die Verbindungseinrichtung (26) eingerichtet ist, Wasser (W) aus einem Abschnitt (21) der Strömungskanäle (20) in wenigstens einen nächsten Abschnitt (21) der Strömungskanäle (20) umzulenken.

9. Strömungsmaschine (1) nach wenigstens einem der vorhergehenden Ansprüche, wobei eine Anzahl erster Abschnitte (21) sich von einer Anzahl zweiter Abschnitte (21) des Wärmetauschers (8) unterscheidet.

10. Strömungsmaschine (1) nach wenigstens einem der vorhergehenden Ansprüche, wobei der wenigstens eine Strömungskanal (20) ein Strömungselement (28) aufweist.
